# EUROPÄISCHE PATENTSCHRIFT

(11) **EP 0 699 836 B1**
(45) Veröffentlichungstag und Bekanntmachung des Hinweises auf die Patenterteilung: **04.10.2006**
(21) Anmeldenummer: 95112490.8
(22) Anmeldetag: 09.08.1995
(51) Int. Cl.: F04B 17/03, F04B 9/04, H02K 5/167

(54) **Einheit aus Antriebsmotor und Radialkolbenpumpe**
Unit consisting of drive motor and radial piston pump
Unité moteur d'entraînement et pompe à pistons radiaux

(30) Priorität: 31.08.1994 DE 4430909
(43) Veröffentlichungstag der Anmeldung: 06.03.1996
(73) Patentinhaber: ROBERT BOSCH GMBH, 70442 Stuttgart (DE)
(72) Erfinder: Rischen, Dietmar, Dipl.-Ing., D-71665 Vaihingen (DE); Huber, Martin, Dipl.-Ing., D-77704 Oberkirch (DE); Braun, Wilhelm, Dipl.-Ing., D-77815 Buehl (DE)

(56) Entgegenhaltungen:
- EP-A- 0 305 037
- EP-A- 0 472 746
- EP-A- 0 509 883
- EP-A- 0 698 183
- DE-A- 4 142 993
- DE-U- 8 809 000
- PATENT ABSTRACTS OF JAPAN vol. 011, no. 355 (E-558), 19.November 1987 & JP 62 131734 A (MABUCHI MOTOR CO LTD), 15.Juni 1987,

## Beschreibung

### Stand der Technik

Die Erfindung geht aus von einer Einheit aus einem elektrischen Antriebsmotor und einer Radialkolbenpumpe gemäß der Gattung des Hauptanspruchs.

Durch die Druckschrift US 5,105,685 ist eine solche Einheit bekannt mit einem elektrischen Antriebsmotor und einer Radialkolbenpumpe, wobei eine Welle, die einen Anker mit einem Kollektor des Antriebsmotors trägt und an einem freien Ende in einen Exzenter zum Antreiben wenigstens eines Pumpenkolbens übergeht, gelagert ist mittels zweier Kugellager, die beiderseits der Kombination aus Kollektor und Anker angeordnet sind. Dabei befindet sich der Kollektor näher beim Exzenter als der Anker. Ein Bürstenhalter für den Kollektor ist befestigt an einem Bauteil, das das zwischen dem Kollektor und dem Exzenter befindliche Kugellager aufnimmt. Nachteilig ist eine relativ große Entfernung zwischen diesem Kugellager und dem frei von der Welle abstehenden Exzenter, denn dieser relativ große Abstand verursacht eine starke Biegebeanspruchung sowohl des Exzenters als auch der Welle. Als Reaktion auf diese hohe Biegebeanspruchung erfährt auch die Welle im Bereich des Kollektors eine Biegebeanspruchung mit der Folge einer elastischen Verformung der Welle und dementsprechend nachteilige radiale Verlagerungen des Teils des Ankers, der dem Kollektor benachbart ist. Es ist nicht ausschließbar, daß deshalb an der Welle Biegeschwingungen auftreten und wegen unvermeidbaren Lagerspiels in den beiden Kugellagern lästiges Geräusch verursacht wird.

Durch die Druckschrift US 4,568,131 ist eine weitere Einheit aus einem elektrischen Antriebsmotor und einer Radialkolbenpumpe bekannt mit zwei Kugellagern, wobei der Kollektor, der Anker und der Exzenter in dieser Reihenfolge zwischen den beiden Kugellagern angeordnet sind. Dabei geht von dem Exzenter ein Wellenstummel aus, der auf kurzem Weg in das eine Kugellager greift. Ein weiterer Wellenstummel angrenzend an den Kollektor taucht in das andere Kugellager ein. Zwar ist in vorteilhafter Weise das eine Kugellager in unmittelbarer Nähe des Exzenters angeordnet, aber dafür ist die Entfernung zwischen den beiden Kugellagern relativ groß, und die Masse des Ankers befindet sich im wesentlichen mittig zwischen den Kugellagern, so daß als ein Nachteil eine große Durchfederung der Welle im Bereich des Ankers nicht ausschließbar ist. Die Welle ist also biegeweich, so daß womöglich der Pumpbetrieb bei sogenannter überkritischer Drehzahl stattfindet mit dem Nachteil, daß beim Übergang von einer unkritischen Drehzahl in die überkritische Drehzahl große radiale Verlagerungen des Ankers aus einer ihm zugedachten Konstruktionsachse nicht ausschließbar sind. Auch dies kann wegen unvermeidlichem Spiel in den Kugellagern zu lästiger Geräuscherzeugung führen.

Durch die EP 0 509 883 B1 ist eine Einheit aus Antriebsmotor und Radialkolbenpumpe mit einem Stator, mit einem Anker, mit einer den Anker und einen Exzenter tragenden Welle und mit drei Kugellagern für die Welle bekannt. Dabei befindet sich das erste Kugellager zwischen dem Anker und dem Exzenter, das zweite Lager neben dem Exzenter im Bereich eines Endes der Welle und das dritte Kugellager am anderen Ende der Welle im Bereich eines dem Anker zugeordneten Kollektors. Vorteilhaft ist die Anordnung dieser drei Kugellager, denn elastische Verbiegungen der Welle werden nunmehr begrenzt. Die Welle hat deshalb im Bereich des Ankers eine härtere Federkonstante und demgemäß eine höhere Eigenschwingungsfrequenz, so daß die Einheit vorzugsweise im unterkritischen Bereich betrieben wird. Nachteilig ist der Preis für das dritte Kugellager.

### Vorteile der Erfindung

Die erfindungsgemäße Einheit aus Antriebsmotor und Radialkolbenpumpe mit den kennzeichnenden Merkmalen des Hauptanspruchs hat den Vorteil, daß für das dritte Lager weniger technischer Aufwand notwendig ist, und daß demzufolge die Einheit billiger wird. Ein weiterer Vorteil besteht darin, daß die für ein solches Gleitlager übliche viskose Schmierung zwischen dem Wellenzapfen und der Gleitlagerbuchse als ein energieverzehrendes Dämpfungsmittel wirkt und insbesondere metallischen Kontakt, der ansonsten eine Geräuschursache ist, vermeidet. Die kennzeichnenden Merkmale des Anspruchs 1 ergeben auch den Vorteil, daß das Gleitlager als solches in sich etwas elastisch ist und zur Bereitstellung von viskosem Schmiermittel mit diesem tränkbar ist. Dieses Schmiermittel ist auch zur Dämpfung von Geräusch geeignet. Wenn im Dämpfungsbetrieb Schmiermittel zunächst aus den Poren heraus zum Wellenzapfen gelangt und nachher vom Wellenzapfen zurückgedrückt wird, ergibt sich innerhalb der Poren ein Strömungswiderstand, der in vorteilhafter Weise energieverzehrend wirkt.

Durch die in den Unteransprüchen aufgeführten Maßnahmen sind vorteilhafte Weiterbildungen und Verbesserungen der im Hauptanspruch angegebenen Einheit möglich. Die kennzeichnenden Merkmale des Anspruchs 2 ergeben den Vorteil einer Selbsteinstellung relativ zur Welle, auch wenn diese im Pumpbetrieb elastische Verbiegungen erfährt. Die kennzeichnenden Merkmale des Anspruchs 3 ergeben den Vorteil, daß auf die Welle weniger verbiegend und erschütternd wirkende Kräfte einwirken, und daß dementsprechend die Beanspruchung des Gleitlagers vermindert wird.

### Zeichnung

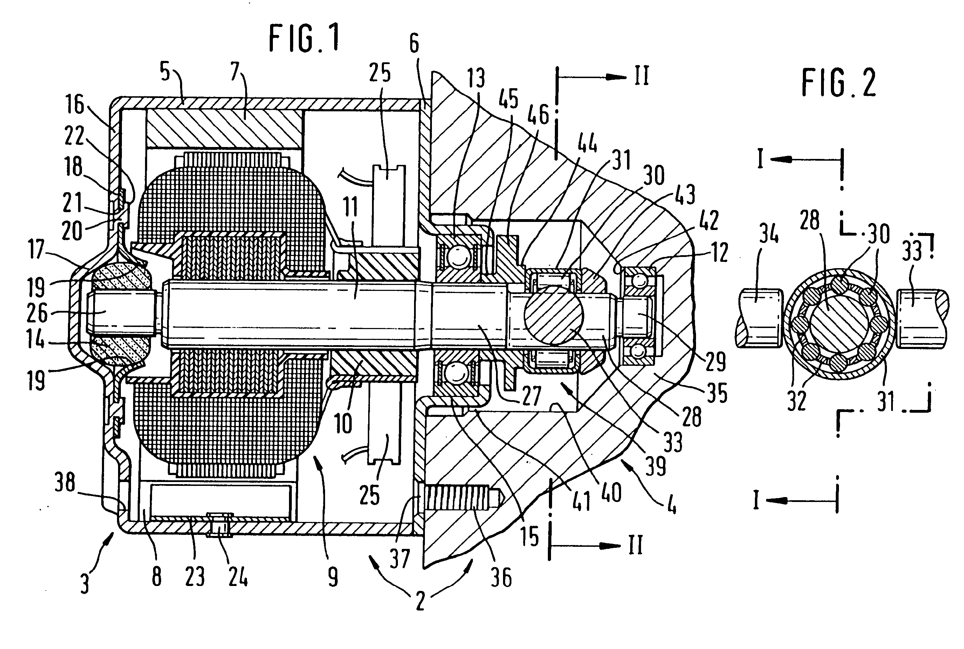

Ein Ausführungsbeispiel der erfindungsgemäßen Einheit aus Antriebsmotor und Radialkolbenpumpe ist in der Zeichnung dargestellt und nachfolgend näher erläutert. Es zeigen Figur 1 einen Längsschnitt durch die erfindungsgemäße Einheit und Figur 2 eine Einzelheit der Einheit gemäß der Figur 1 im Querschnitt.

### Beschreibung des Ausführungsbeispiels

Die erfindungsgemäße Einheit besteht aus einem elektrischen Antriebsmotor 3 und einer mit diesem zusammengebauten Radialkolbenpumpe 4.

Der elektrische Antriebsmotor 3 hat ein im wesentlichen topfartiges Gehäuse 5, einen Motordeckel 6, einen wenigstens aus zwei Permanentmagneten 7, 8 bestehenden Stator, einen Anker 9 mit einem zugeordneten Kollektor 10, eine den Anker 9 und den Kollektor 10 tragende Welle 11, die in drei Lagern 12, 13 und 14 drehbar gelagert ist. Dabei ist das Lager 13 als ein Kugellager ausgebildet. Das Kugellager 13 wird getragen innerhalb eines rohrförmigen Ansatzes 15, der an den Motordeckel 6 angeformt ist. Das Lager 14 ist in erfindungswesentlicher Weise als ein Gleitlager ausgebildet. Vorteilhafterweise ist dieses Gleitlager 14 ein Sintermetall-Lager, dessen Porenräume mit einem Schmierstoff wie hochalterungsbeständigem Schmieröl gefüllt sind. Ein solches Sintermetall-Lager ist beschrieben in dem Buch "Konstruktionselemente der Feinmechanik", Professor Dr. Ing. habil. Werner Krause, Karl Hanser Verlag München Wien, ISBN 3-446-15332-2, Jahr 1989, Seiten 362 und 363. Vorteilhafterweise ist das Sintermetall-Lager 14 als ein auf der Seite 362 in Bild 8.2.9.e dargestelltes Kalottenlager ausgebildet. Zu diesem Zweck besitzt eine Stirnwand 16 des topfartigen Gehäuses 5 eine durch Pressen oder Tiefziehen erzeugte Ausbuchtung 17, in die das Sintermetall-Lager 14 eintaucht. Zur Lagesicherung des Sintermetall-Lagers 14 in der Ausbuchtung 17 ist ein Sicherungsblech 18 vorgesehen, das gegen das Sintermetall-Lager 14 drückende federnde Zungen 19 aufweist. Beispielsweise ist das Sicherungsblech 18 mit der Stirnwand 16 vernietet. Dies kann beispielsweise in der bekannten Weise erfolgen, daß aus dem Werkstoff der Stirnwand 16 sogenannte Nietzapfen 20 geformt werden, die durch Löcher 21, die sich in den Sicherungsblechen 18 befinden, hindurchragen und zu Nietköpfen 22 umgeformt sind.

Zur Lagesicherung des wenigstens einen Permanentmagnets 7 bzw. 8 in dem topfartigen Gehäuse 5 ist wenigstens eine Sicherungsfeder 23 vorgesehen. Diese Sicherungsfeder 23 ist mittels eines Sicherungszapfens 24 relativ zum topfartigen Gehäuse 5 fixiert. Dem Kollektor sind wenigstens zwei Kohlebürsten 25 zugeordnet. Die Kohlebürsten 25 sind geführt in nicht dargestellten Köchern, die beispielsweise in einer in der Druckschrift US 5,105,685 skizzierten Weise nahe bei dem Kugellager 13 vorzugsweise an dem Motordeckel 6 befestigt sind.

Zur Lagerung in dem Gleitlager 14 besitzt die Welle 11 vom Anker 9 abstehend einen Wellenzapfen 26. Innerhalb des Kugellagers 13 besitzt die Welle 11 einen zylindrischen Abschnitt 27. Auf diesen zylindrischen Abschnitt 27 folgt ein Exzenter 18 in Richtung zu dem Kugellager 12. Wie aus der Figur 1 ersichtlich, ist der Exzenter 28 einstückig mit der Welle 11 ausgebildet und befindet sich innerhalb der Projektion des zylindrischen Abschnitts 27. An den Exzenter 28 schließt sich ein weiterer Wellenzapfen 29 der Welle 11 an. Im vorliegenden Beispiel ist der Exzenter 28 von Lagernadeln 30 umgeben, um die sich ein Lagerring 31 erstreckt. Ein Nadelkäfig 32 sorgt für eine ausreichende Parallelausrichtung der Lagernadeln 30 zum Exzenter 28. Mittels des Exzenters 28 sind unter Zwischenschaltung der Lagernadeln 30 und des Lagerrings 31 zwei Pumpenkolben 33 und 34 verschiebbar. Zur direkten oder indirekten verschiebbaren Aufnahme der Pumpenkolben 33 und 34 ist ein Pumpengehäuse 35 vorgesehen. Dieses Pumpengehäuse 35 ist mit dem Motordeckel 6 vereinigt und weist zu diesem Zweck wenigstens ein Gewindeloch 36 auf. Diesem Gewindeloch 36 ist im Motordeckel 6 ein Loch 37 und im Gehäuse 5 ein Loch 38 zugeordnet. Durch die Löcher 37 und 38 ist eine nicht dargestellte Schraube durchsteckbar, mittels der der elektrische Antriebsmotor 3 und die Radialkolbenpumpe 4 zu der Einheit 2 zusammenspannbar sind. Damit der Exzenter 28 innerhalb des Pumpengehäuses 35 bewegbar ist, weist das Gehäuse 35 einen Exzenterraum 39 auf. Der Exzenterraum 39 ist umgrenzt von einer für diesen Zweck vorgesehenen Stufenbohrung 40. Dabei ist die Stufenbohrung 40 so ausgebildet, daß zwischen ihr und dem rohrartigen Ansatz 15 ein radialer Abstand 41 verbleibt. An die Stufenbohrung 40 schließt sich eine Bohrung 42 an, in die das Kugellager 12 eingesetzt ist. Dabei besteht die Möglichkeit, daß das Kugellager 12 fest in dieser Bohrung 42 sitzt und der Wellenzapfen 29 relativ zum Kugellager verschiebbar ist, oder umgekehrt.

In axialer Ausrichtung relativ zum Exzenter 28 sind die Lagernadeln 30 und der Lagerring 31 gesichert mittels eines Anschlagringes 43, der auf den Exzenter 28 aufgepreßt ist und mittels eines weiteren Anschlagringes 44, der in eine Nabe 45 übergeht und mittels dieser auf dem zylindrischen Abschnitt 27 der Welle fixiert ist. Da gemäß der Figur 1 der Exzenter 28, die Lagernadeln 30 und der Lagerring 31 erkennbar eine Unwucht bilden, ist an die Nabe 45 ein Gegengewicht 46 angeformt. Dabei kann das Gegengewicht 46 so dimensioniert sein, daß auch Massen der Pumpenkolben 33 und 34 wenigstens teilweise ausgleichbar sind.

Der elektrische Antriebsmotor 3 wird beispielsweise in einer Motorenfabrik hergestellt und dort beim Zusammenbauen auch gleich mit der Nabe 45, den Lagernadeln 30 und dem Lagerring 31 sowie dem Anschlagring 43 zusammengefügt. Zur Vereinigung wird die Welle 11 mit dem Wellenzapfen 29 voraus in den Exzenterraum 39 eingeführt, wobei dann die Lagerung des Wellenzapfens 29 mittels des Kugellagers 12 zustandekommt. Dabei spielt es, wie bereits angedeutet, an sich keine Rolle, ob das Kugellager 12 zuerst eingeführt und dann der Wellenzapfen 29 eingesteckt wird oder ob der Wellenzapfen 29 gemeinsam mit dem Kugellager 12 in die Bohrung 42 eingesteckt wird. Jedenfalls erfolgt beim Einstecken des Lagerzapfens 29 die Zentrierung des elektrischen Antriebsmotors 3 relativ zum Pumpengehäuse 35, wobei, ab der Anlage des Motordeckels 6 an dem Pumpengehäuse 35 der radiale Abstand 41 vorhanden ist.

Ergänzend wird darauf hingewiesen, daß der Exzenter 28 nicht wie in der Figur 1 dargestellt zwischen dem Wellenzapfen 29 und dem zylindrischen Abschnitt 27 der Welle 11 einstückig mit dieser ausgebildet sein muß. Vielmehr besteht auch, so wie dies in der EP 0 509 833 B1 dargestellt ist, die Möglichkeit, den Exzenter in Form einer exzentrischen Buchse auszubilden und über einen zylindrischen Abschnitt der Welle zu montieren und gegen Verdrehung relativ zur Welle zu sichern. Dies kann beispielsweise durch Aufpressen des Exzenters auf die Welle erfolgen. Bei einer solchen Ausführungsart bietet sich dann auch eine Weiterbildung an gemäß der Druckschrift DE 42 41 827 Al, die dadurch gekennzeichnet ist, daß der Exzenter aus einem Kunststoff hergestellt ist.

Beim Einschalten des elektrischen Antriebsmotors 3 dreht der Anker 9 die Welle 11, so daß der Exzenter 28 und der Lagerring 31 eine exzentrische Umlaufbewegung ausführen und dabei gegen die Pumpenkolben 33 und 34 wirken. Bei Verschiebungen der Pumpenkolben 33 und 34 jeweils weg von der Längsachse der Welle 11 wird in nicht dargestellten Pumpenzylindern, die beispielsweise aus dem Stand der Technik entnehmbar sind, Druck erzeugt. Dabei ist nicht ausschließbar, daß die Welle 11 im Bereich zwischen dem zylindrischen Abschnitt 41 und dem Wellenzapfen 29 eine elastische Verbiegung erfährt, die, wenn das dritte Lager 14 nicht vorhanden wäre, zu einer nachteiligen radialen Verlagerung des Ankers 9 relativ zu dem Stator, bestehend aus den Permanentmagneten 7 und 8, zustandekäme. Das Lager 14 und der Wellenzapfen 26 der Welle 11 begrenzen die Auswanderung des Ankers 9 in radialer Richtung im wesentlichen auf ein Ausmaß, das einem Lagerspiel zwischen dem Wellenzapfen 26 und dem Gleitlager 14 entspricht. Weil das Gleitlager 14 als Sintermetall-Lager ausgebildet und mit viskosem Schmiermittel gefüllt ist, steht viskoses Schmiermittel zwischen dem Sintermetall-Lager 14 und dem Wellenzapfen in einem nicht gezeigten Lagerspalt zur Verfügung. Aufgabengemäß vermeidet dieses viskose Schmiermittel einen metallichen Kontakt zwischen dem Lagerzapfen 26 und dem Sinterwerkstoff des Sinterwerkstoff-Lagers 14, wobei noch der wesentliche Vorteil gegenüber einem Kugellager auftritt, daß nun der viskose Schmierfilm zusammen mit dem Lagerzapfen 26 und dem Sintermetall-Lager 14 eine hydraulische Dämpfungseinrichtung bildet zur Dämpfung von Schwingungen der Welle 11, die beim Betrieb der erfindungsgemäßen Einheit angefacht werden, sei es durch Unwucht des Ankers 9, durch die Unwucht des Exzenters, die Massen der Kolben 33 und 34 oder eine nur unvollkommene Kompensation durch das Gegengewicht 46. Die Einheit 2 ist also gegenüber einer Einheit, die gemäß dem Stand der Technik drei Kugellager aufweist, mit einer geräuschmindernden Maßnahme ausgestattet, was sich besonders vorteilhaft bemerkbar macht, wenn diese Einheit bestimmungsgemäß in einem Kraftfahrzeug verwendet wird als Bestandteil einer Blockierschutzeinrichtung oder einer Antriebsschlupfregeleinrichtung, so wie dies die EP 0 509 883 B1 lehrt durch Anbau von elektromagnetisch steuerbaren Ventilen zum Verändern von Bremsdrücken.

## Patentansprüche

1. Einheit aus Antriebsmotor (3) und Radialkolbenpumpe (4) mit einem Stator, mit einem Anker (9), mit einem Exzenter (18), mit wenigstens einem Pumpenkolben (33, 34) und mit einer gemeinsam den Anker (9) und den Exzenter (18) tragenden Welle (11), mit einem ersten Lager (13) für die Welle (11) zwischen dem Anker (9) und dem Exzenter (18), mit einem zweiten Lager (12) neben dem Exzenter (18) und mit einem dritten, beim Anker (9) angeordneten Lager (14), **dadurch gekennzeichnet,**
**dass** das dritte Lager (14) als ein Gleitlager ausgebildet ist, dass das erste Lager (13) und das zweite Lager (12) Wälzlager sind und dass das Gleitlager (14) als Sintermetall-Lager ausgebildet ist.

2. Einheit aus Antriebsmotor und Radialkolbenpumpe nach Anspruch 1, **dadurch gekennzeichnet, dass** das Gleitlager (14) als Kalottenlager ausgebildet ist.

3. Einheit aus Antriebsmotor und Radialkolbenpumpe nach Anspruch 1 oder 2, **dadurch gekennzeichnet, dass** dem Exzenter (18) ein mit der Welle (11) umlaufendes Gegengewicht (46) zugeordnet ist.

## Claims

1. Unit comprising a drive motor (3) and a radial piston pump (4), which has a stator, an armature (9), an eccentric (18), at least one pump piston (33, 34), and a shaft (11) conjointly carrying the armature (9) and the eccentric (18), and which has a first bearing (13) for the shaft (11) between the armature (9) and the eccentric (18), a second bearing (12) next to the eccentric (18), and a third bearing (14) arranged at the armature (9), **characterized in that** the third bearing (14) is designed as a slide bearing, **in that** the first bearing (13) and the second bearing (12) are rolling bearings and **in that** the slide bearing (14) is designed as a sintered metal bearing.

2. Unit comprising a drive motor and a radial piston pump according to Claim 1, **characterized in that** the slide bearing (14) is designed as a spherical cap bearing.

3. Unit comprising a drive motor and a radial piston pump according to Claim 1 or 2, **characterized in that** a counterweight (46) rotating with the shaft (11) is associated with the eccentric (28).

## Revendications

1. Unité de moteur d'entraînement (3) et pompe à pistons radiaux (4) comportant un stator, un rotor (9), un excentrique (18), au moins un piston de pompe (33, 34) et un arbre (11) portant conjointement le rotor (9) et l'excentrique (18), un premier palier (13) destiné à l'arbre (11) entre le rotor (9) et l'excentrique (18), un deuxième palier (12) à côté de l'excentrique (18) et un troisième palier (14) à proximité du rotor (9),
**caractérisée en ce que**
le troisième palier (14) est un palier lisse,
le premier palier (13) et le deuxième palier (12) sont des paliers à roulement, et le palier lisse (14) est un palier en métal fritté.

2. Unité de moteur d'entraînement et pompe à pistons radiaux selon la revendication 1,
**caractérisée en ce que**
le palier lisse (14) est un palier à calotte.

3. Unité de moteur d'entraînement et pompe à pistons radiaux selon la revendication 1 ou 2,
**caractérisée en ce qu'**
une masse d'équilibrage (46) tournant avec l'arbre (11) est associée à l'excentrique (18).
